# EUROPEAN PATENT APPLICATION

(11) **EP 4 668 151 A1**
(43) Date of publication of application: **24.12.2025**
(21) Application number: 25184292.8
(22) Date of filing: 20.06.2025
(51) Int. Cl.: G06F 30/12, G06F 111/16

(54) **INTEGRATION CAPABILITY FOR LIGHTWEIGHT VIEWER**

(30) Priority: 21.06.2024 US 202418749728
(71) Applicant: RTX Corporation, Farmington, CT 06032 (US)
(72) Inventor: YANAROS, Andrew, Farmington 06032 (US); RICH, Kevin, Farmington 06032 (US)
(74) Representative: Dehns

(57) **Abstract**

A user interface (48) for a lightweight viewer (46) may include a viewing window (52-1) operable to display geometry (33) established by geometric objects (54) of a tessellated model (36). Groups (54G) of the geometric objects (54) may be associated with the geometry (33) of respective components (C) of an assembly (A). Annotation objects (64) of the tessellated model (36) may be operable to depict annotation information associated with the tessellated model (36) as graphical annotations in the viewing window (52-1). The groups (54G) of the geometric objects (54) may be assigned to two or more responsible entities according to an interface requirements definition (43). The annotation information may be associated with one or more interfaces between adjacent components of the assembly according to the interface requirements definition (43).

## Description

### BACKGROUND

This disclosure relates to modeling and interaction with the design of various components.

Computer-Aided Design (CAD) systems are known and may be utilized to generate two-dimensional and three-dimensional (3D) models of various components. The associated CAD files may be relatively large, which may impede transfer to other computing systems. A lightweight, tessellated representation of the CAD model may be generated and stored within a file that excludes the original CAD model. The file may be saved in a Portable Document Format (PDF) or another file format. A lightweight viewer may be utilized to view the lightweight representation.

A CAD model and/or interface control model (ICM) may be generated to design an interface between adjacent components.

### SUMMARY

A user interface for a lightweight viewer may include a viewing window operable to display geometry established by geometric objects of a tessellated model. Groups of the geometric objects may be associated with the geometry of respective components of an assembly. Annotation objects of the tessellated model may be operable to depict annotation information associated with the tessellated model as graphical annotations in the viewing window. The groups of the geometric objects may be assigned to two or more responsible entities according to an interface requirements definition. The annotation information may be associated with one or more interfaces between adjacent components of the assembly according to the interface requirements definition.

In any implementations, an information window may be established by a content object of the tessellated model. The content object may be operable to display content information associated with the tessellated model in the information window in response to activation of the respective group of geometric objects. The content information may be specified according to the interface requirements definition.

In any implementations, the annotation information and/or the content information may include non-geometric performance requirements specified according to the interface requirements definition.

In any implementations, different portions of the content information may be assigned to the groups of geometric objects according to the interface requirements definition. The content object may be operable to selectively display the different portions of the content information in response to selection of the respective groups of geometric objects.

In any implementations, a navigation window may be operable to display view objects associated with respective depictions of the geometric objects. The viewing window may be operable to selectively display the depictions in response to selection of the respective view objects. The content object may be linked to the view objects such that the different portions of the content information may be selectively displayed in the information window in response to selection of the respective view object.

In any implementations, the groups of geometric objects may include a first group of geometric objects associated with an envelope representative of a boundary constraining the assembly.

In any implementations, the geometric objects may include one or more visual attributes that may depict the respective geometry such that the respective components may be visually distinct according to the respective responsible entities.

In any implementations, the visual attributes may include a color attribute type associated with a set of colors, a contrast attribute type associated with a set of contrast levels and/or a transparency attribute type associated with a set of transparency levels.

In any implementations, the annotation information may include identifiers associated with the respective responsible entities. The annotation objects may be operable to depict a relationship between the identifiers and the respective groups of geometric objects.

In any implementations, the tessellated model may exclude any CAD model associated with the geometry.

A system for generating a tessellated model may include processing circuitry including one or more processors operably coupled to memory. The processing circuitry may be operable to execute a modeling environment. The modeling environment may be operable to access a computer-aided design model associated with geometry of components that may establish an assembly. The components may be associated with different responsible entities according to an interface requirements definition. The modeling environment may be operable to generate geometric objects that establish a tessellation of the geometry. The geometric objects may be grouped by component. The modeling environment may be operable to generate annotation objects associated with the respective geometric objects and assigned annotation information according to the interface requirements definition. The modeling environment may be operable to generate a content object assigned content information associated with the respective groups of geometric objects according to the interface requirements definition. The modeling environment may be operable to generate a tessellated model including the geometric objects, the annotation objects and the content object. The geometric objects may be operable to display the tessellation of the geometry in a viewing window of a user interface. The annotation objects may be operable to depict the respective annotation information as graphical annotations in the viewing window. The content object may be operable to display, in an information window, content information assigned to the respective groups of geometric objects according to the interface requirements definition.

In any implementations, the geometric objects may include an interface object. The modeling environment may be operable to determine an interface between adjacent components of the assembly according to the interface requirements definition. The modeling environment may be operable to generate the interface object to depict the interface. The modeling environment may be operable to assign the annotation information associated with the interface to one or more of the annotation objects.

In any implementations, the annotation information and/or the content information may include non-geometric performance requirements specified according to the interface requirements definition.

In any implementations, the modeling environment may be operable to generate a navigation window operable to display view objects associated with respective depictions of the geometric objects. The viewing window may be operable to selectively display the depictions in response to selection of the respective view objects.

In any implementations, different portions of the content information may be selectively displayed in the information window in response to selection of the respective view object.

In any implementations, the modeling environment may be operable to embed the tessellated model in an interface control model associated with the interface requirements definition.

In any implementations, the modeling environment may be operable to store the tessellated model in a file readable by a lightweight viewer. The file may exclude the CAD model.

A method of establishing a tessellated model may include generating groups of geometric objects that may establish a tessellation of geometry stored in a computer-aided design model. The groups of geometric objects may be associated with respective components of an assembly that may be assigned to different responsible entities according to an interface requirements definition. The geometric objects may be operable to display the tessellation of the geometry in a viewing window of a user interface. The method may include generating information objects. The method may include assigning information associated with the geometric objects to the information objects according to the interface requirements definition. The information objects may be operable to depict the respective information in the user interface in response to activation of the respective groups of geometric objects. The method may include generating a tessellated model including the geometric objects and the information objects.

In any implementations, the information objects may include one or more annotation objects and a content object. The annotation objects may be operable to depict the assigned information as graphical annotations in the viewing window. The content object may be operable to display different portions of the assigned information in an information window of the user interface in response to selection of the respective group of geometric objects.

In any implementations, the method may include storing the tessellated model in a file that excludes the CAD model. The method may include displaying the tessellated model in a lightweight viewer.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 discloses a modeling system.
Figure 2 discloses a graphical depiction of a tessellated model.
Figure 3 discloses an arrangement of a tessellated model.
Figure 4 discloses a graphical user interface for depicting geometry.
Figure 5 discloses annotations associated with the geometry of Figure 4.
Figure 6 discloses a datum associated with the geometry of Figure 5.
Figure 7 discloses annotations associated with a responsible entity assigned to a portion of the geometry of Figure 4.
Figure 8 discloses a constraint associated with the geometry of Figure 4.
Figure 9 discloses a transparency of the constraint of Figure 8.
Figure 10 discloses a method of generating a tessellated model.

Like reference numbers and designations in the various drawings indicate like elements.

### DETAILED DESCRIPTION

An interface control definition (e.g., document) (ICD) may define the physical and functional aspects of engine-to-airframe interfaces (e.g., the points at which the engine and air vehicle may intentionally touch each other, areas in which a gap may be desired, and/or the attributes of exchange items that may flow across an interface). Physical interfaces may be defined in a computer aided design (CAD) system using a 3D CAD model. In legacy ICDs, a reference to an Authoritative Source of Truth (ASOT) file may be provided, along with a 2D image of the model which may be useful to provide a visual representation of the interface, and associated technical data. The ICD may be incorporated into an interface control model (ICM), which may include a digital representation of interface data. A digital thread may be defined, which may identify and link all reference ASOT data from a centralized model. The referenced elements may include the 3D CAD models. A model based system engineering tool (e.g., Cameo) may be utilized to design the various interface associated with geometry in the CAD model. The disclosed techniques may be used to establish tessellated models, which may be embedded in the ICM. The tessellated models may provide ICM users the ability to view geometry associated with the CAD models, generated from the CAD ASOT model. The tessellated model may be stored in a lightweight, viewable file that may be readable by a lightweight viewer, such as Adobe.

The user may interact with the lightweight viewer to view the geometry and associated annotations. The annotations may include geometric dimensioning and tolerance information for manufacture of various parts, including various aircraft components and/or assemblies.

In implementations, integration-specific annotations and information may be embedded in a display window of lightweight viewer that may present information relating to the associated geometric model. The geometric model may include components assigned to different responsible entities. The annotations and information may include the responsible entity, and dimensioning and tolerancing information. The information may be defined by interface requirements. The code (e.g., script) to generate the functionality may be embedded within the tessellated file (e.g., PDF).

In implementations, a system may be operable to access a three dimensional model definition encoded therein with a first component (e.g., part) may have a first attribute defining a first responsible party and a second component (e.g., part) having a second attribute defining a second responsible party. An interface may be defined between the first component and the second component. The interface may have a third attribute defining interface requirements. The interface requirements may include geometric requirements and/or non-geometric performance requirements. A design environment (e.g., CAD system) may be provided with a part definition (e.g., model based definition). The part definition may have a region that may interface to a second part. The system may be configured to analyze the part and identify an interface definition including performance requirements associated with the interface between the first and the second components. The system may be configured to generate a three dimensional (e.g., tessellated) model file including at least one surface generated from the part definition, which may have less fidelity than the part definition, and may include the performance requirements generated using the part definition.

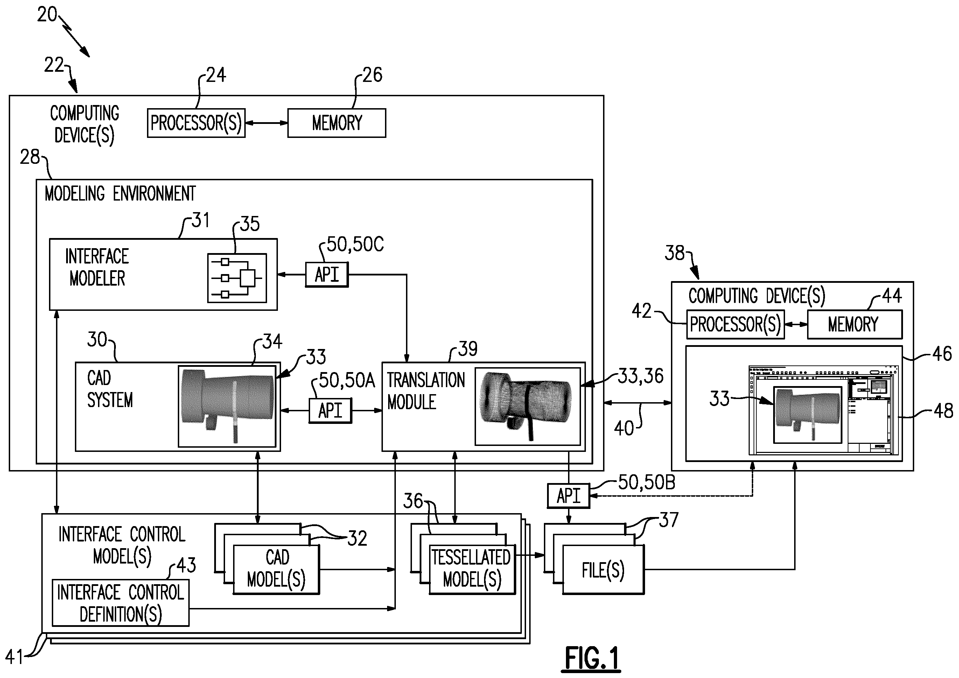

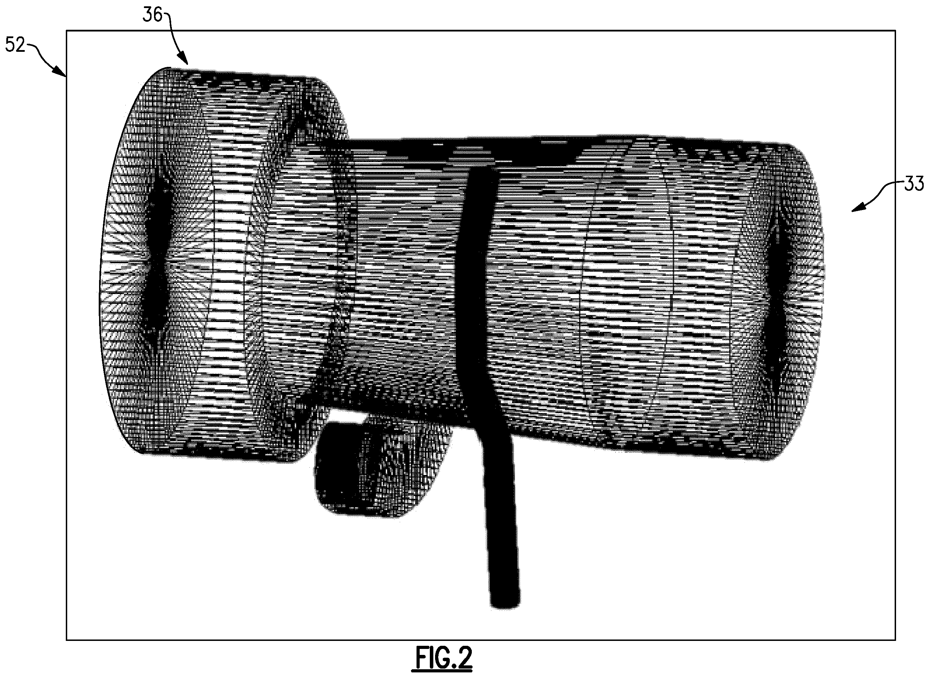

Figure 1 discloses a modeling system 20 according to an implementation. The modeling system 20 may be operable to interact with one or more computer-aided design (CAD) models and/or interface control models (ICMs). The modeling system 20 may be operable to generate one or more tessellated models from model based definition (MBD), which may include one or more CAD model(s). The CAD models may depict geometry associated with one or more components of an assembly, including one or more gas turbine engine components and/or aircraft components. The tessellated model may be relatively compact and may include a lesser amount of data compared to the respective CAD model(s). The tessellated model may represent CAD geometry as a set of facets (e.g., triangles) that may be patched together (e.g., Figure 2). Each of the facets may be defined by three respective points of a point cloud. The features disclosed herein may be incorporated into, or may otherwise be utilized with, a lightweight viewer. The tessellated models may be viewable in the lightweight viewer. For the purposes of this disclosure, a "lightweight viewer" is a software application suitable to view tessellated models. The lightweight viewer may be operable to view and interact with, but not edit, the tessellated model. Lightweight viewers may include a 3D PDF or HTML viewer or another viewer such as JT2Go operable to access tessellated models stored in a lightweight file format.

The modeling system 20 may be operable to embed information associated with one or more interfaces in the tessellated models. The tessellated model may facilitate integration of components and/or sub-assemblies between different responsible entities, including various suppliers (e.g., vendors) and airframe manufacturers.

The modeling system 20 may include at least one computing device (e.g., processing circuitry) 22. The computing device 22 may include one or more processors 24 operably coupled to memory 26. The computing device 22 may be operable to execute a modeling environment (e.g., tool) 28. The processor(s) 24 may be collectively operable to execute the modeling environment 28. The modeling environment 28 may incorporate or may otherwise interface with a CAD system 30 (e.g., CATIA, AutoCAD, Solidworks, Siemens NX, etc.). The CAD system 30 and/or another portion of the modeling environment 28 may be operable to access one or more CAD models 32. Each of the CAD models 32 may be associated with geometry. The geometry may be associated with one or more virtual and/or physical components, sub-assemblies, assemblies and/or systems. The CAD system 30 may be operable to display one or more of the CAD models 32 in a user interface 34.

The modeling environment 28 may incorporate or may otherwise interface with an interface modeler 31 (e.g., Cameo, etc.). The interface modeler 31 may be operable to evaluate one or more interfaces between components of an assembly. The interface modeler 31 and/or another portion of the modeling environment 28 may be operable to access one or more interface control models (ICMs) 41. The ICMs 41 may include one or more interface control (e.g., requirements) definitions (ICDs) 43. The ICDs 43 may be associated with one or more interface control documents. Each of the ICMs 41 and/or respective ICDs 43 may be associated with one or more interfaces. The interfaces may be associated with one or more virtual and/or physical components, sub-assemblies, assemblies and/or systems. The ICM 41 may include all information defining an interface between interfacing components, including geometric requirements (e.g., dimensions, tolerances, etc.) and non-geometric performance requirements (e.g., flow, temperature, pressure, etc.). The ICM 41 may include one or more objects arranged in a hierarchy to define the interface. The interface modeler 31 may be operable to assess compatibility between interfacing components. The interface modeler 31 may be operable to display or otherwise depict the interfaces and/or associated information in a user interface 35. In implementations, the CAD model 32 may be the ASOT for the geometric data and/or envelope data, but the interface data may not be contained in the CAD model 32; the interface data may be contained in the ICM 41. The CAD model(s) 32, tessellated model(s) 36 and/or ICD(s) 43 may be contained in, linked to (e.g., by hyperlink), or otherwise associated with the respective ICM 41.

A user may desire to share or otherwise communicate information associated with the design to one or more other users, such as another member of a development or integration team, a customer, or a supplier. The information may include one or more interface requirements associated with any components assigned to the respective responsible entities. The modeling environment 28 may be operable to access CAD model(s) 32 associated with geometry of components that establish an assembly. The components may be associated with different responsible entities according to the respective ICD 43.

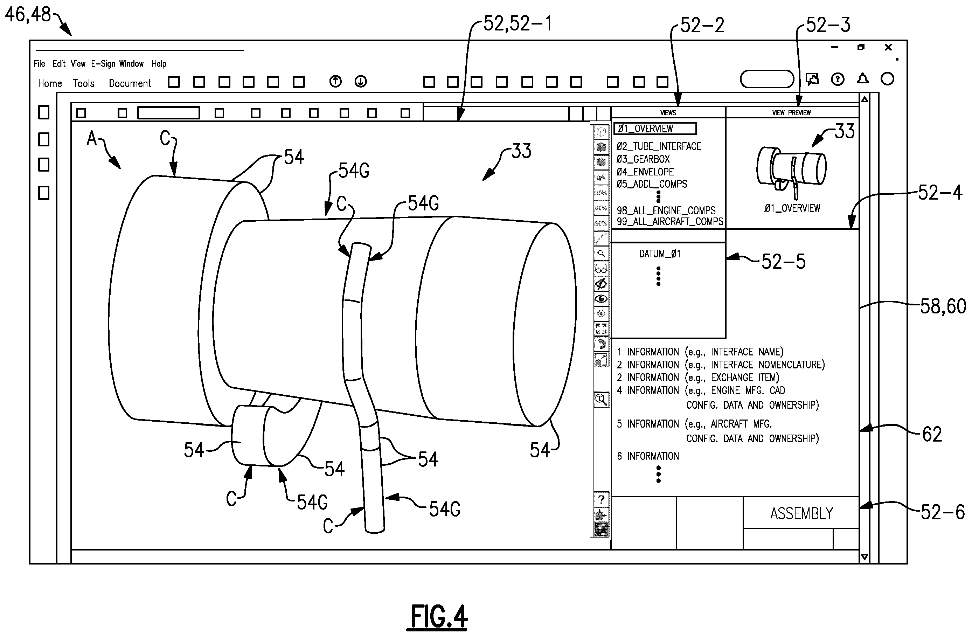

The modeling environment 28 may be operable to generate one or more tessellated models 36, which may have a relatively lesser amount of information than the associated CAD model(s) 32 for communication to the other users. The tessellated model 36 may be stored in one or more lightweight files 37. The CAD model(s) 32 and tessellated model 36 may be associated with geometry 33 (e.g., Figures 2 and 4). The tessellated model 36 may exclude the exact CAD geometry and/or any CAD model 32 associated with the geometry 33.

Various users may access and review the tessellated models 36 in a lightweight viewer. Various lightweight viewers may be utilized, such as Adobe which may be operable to access PDF files. The lightweight viewer may be operable to access and view lightweight files containing tessellated models but not any files containing CAD models, including the exact CAD geometry. In other implementations, the modeling environment 28 may be operable to store the tessellated model 36 and the exact CAD geometry in the same file. Each of the tessellated models 36 may be associated with one or more respective CAD models 32 that store the exact CAD geometry and related information. Figure 2 discloses a graphical depiction of a tessellated model 36 in a display window 52 according to an implementation. The specific geometry of the depicted tessellated model 36 is not intended to limit this disclosure.

The modeling environment 28 may be operable to access and display each of the tessellated models 36. In implementations, one or more (e.g., client) computing devices 38 may be operable to access the tessellated models 36. The computing devices 22, 38 may include one or more computer processors, memory, storage means, network devices, input and/or output devices, and/or interfaces. The computing devices 22, 38 may be operable to execute one or more software programs, including one or more portions of the modeling environment 28. The computing devices 22, 38 may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing devices 22, 38 may be a desktop computer, laptop computer, smart phone, tablet, or any other computer device. Input devices may include a keyboard, mouse, touchscreen, etc. The output devices may include a monitor, speakers, printers, etc. Each of the computing devices 38 may include one or more processors 42 coupled to memory 44. The computing device 38 may be coupled to the computing device 22 by connection(s) 40. The connection 40 may be a wired and/or wireless connection. The connection 40 may be established over one or more networks and/or other computing systems.

The processor(s) 42 of the computing device 38 may be collectively operable to execute a lightweight viewer 46. The lightweight viewer 46 may be a separate software application executable by the computing device 38 or may be a service provided by the computing device 22 which may be accessible by a thin client or browser over a network connection. The lightweight viewer 46 may be operable to access the tessellated models 36. The lightweight viewer 46 may be displayed in a display device. The lightweight viewer 46 may include a graphical user interface (GUI) 48 operable to display the tessellated model 36. The lightweight viewer 46 may be operable to read tessellated models 36 but not any CAD models 32, including CAD model(s) 32 relating to geometry associated with the tessellated models 36.

Various techniques may be utilized to establish the tessellated models 36. The modeling environment 28 may be operable to generate one or more objects (e.g., elements), including any of the objects disclosed herein. In implementations, the objects may be field objects. The tessellated model 36 may include one or more field objects. The field objects and associated contents may be embedded within the tessellated model 36.

The modeling environment 28 may include, or may otherwise interface with, one or more application programming interfaces (API) 50. In the implementation of Figure 1, the system 20 may include, or may otherwise interface with, a first API 50A, a second API 50B and/or a third API 50C. The functionality of the APIs 50A, 50B, 50C may be incorporated into a single API 50 or may be distributed between fewer or more than three APIs. The CAD system 30 and/or lightweight viewer 46 may be operable to interact with the respective CAD models 32 and tessellated models 36 according to the API(s) 50. The lightweight viewer 46 may be configured to recognize objects, function calls, data structures, etc. specified in the API 50. The API 50 may be utilized to establish one or more tessellated models 36. The API 50 may be utilized to convert the CAD models 32 to tessellated models 36. The modeling environment 28 may include a translation module 39 operable to establish tessellated models 36 and/or lightweight files 37. The translation module 39 may be operable to interact with the API 50B to establish (e.g., render) tessellated models 36. The translation module 39 may be operable to interact with the API 50B to establish lightweight files 37 including tessellated model(s) 36 in a format (e.g., data structure) supported by the API 50B and/or lightweight viewer 46.

The translation module 39 may be operable to interact with the API 50C to establish (e.g., render) tessellated models 36. The API 50C may be utilized to associated various information specified in the ICM 41 and/or ICD 43 with the geometry depicted by the tessellated models 36.

The API 50 may be utilized to assign various information, scripts and other data to one or more fields of the field objects. The field objects may be established according to data structure(s) specified in the API 50. The API 50 may provide the ability to associate scripts with objects of the tessellated model 36. The code (e.g., script) to generate the disclosed features and/or any code that causes any associated functions to occur in the lightweight viewer (e.g., in response to selection of the objects of the model 36) may be embedded within the same lightweight file 37 as the objects of the model 36 associated with the model geometry 33. The scripts and other code may be executed in response to user interaction and/or selection of the respective field object. The scripts may be specified according to JavaScript or another scripting language supported by the API 50. Storing the code that causes the function(s) associated with the objects and other features in the lightweight file 37 itself allows for the publisher to control the file presentation directly and does not require a special viewer.

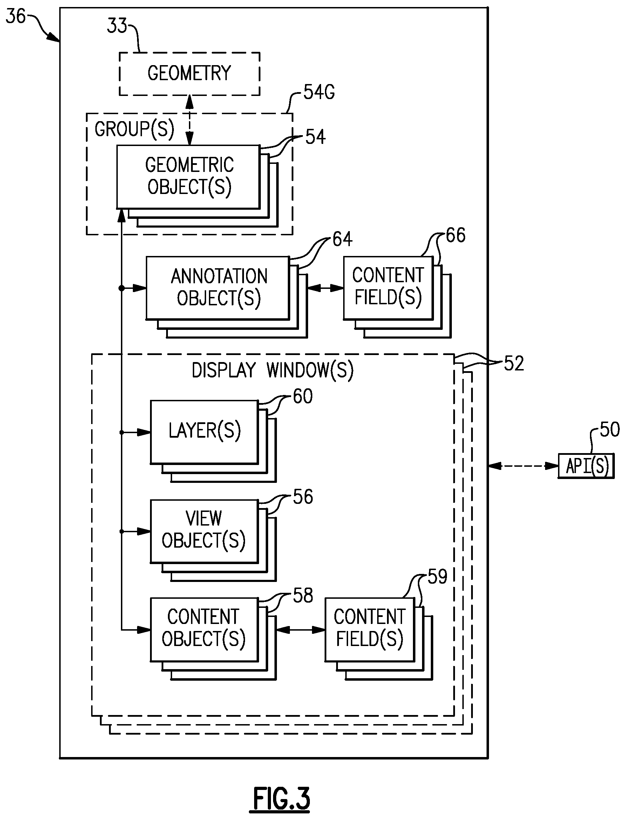

Figure 3 schematically discloses a tessellated model 36 according to an implementation. The tessellated model 36 may include any of the objects and associated structures disclosed herein. The tessellated model 36 may be established with respect to one or more data structures specified in the API 50. Various techniques may be utilized to establish relationships between the various objects of the tessellated model 36, including one or more static and/or dynamic links which may be specified in field(s) of the field objects. The **API** 50 may be utilized to establish the objects and links.

Referring to Figure 4, with continuing reference to Figures 1-3, the tessellated model 36 may establish a (e.g., graphical) user interface 48. The user interface 48 may be suitable for a lightweight viewer, such as lightweight viewer 46, which may display the tessellated model 36 according to the **API** 50. Figure 4 discloses an implementation of the lightweight viewer 46. The tessellated model 36 may include the tessellated geometry, information associated or presented with the tessellated geometry, and/or information utilized to establish the user interface 48.

The user interface 48 may include one or more display windows 52 which may serve to divide the user interface 48 into different areas. **In** the implementation of Figure 4, the display windows 52 may include a first (e.g., main) viewing window 52-1, a second (e.g., navigation) window 52-2, a third (e.g., preview) window 52-3, a fourth (e.g., information) window 52-4, a fifth (e.g., datum) window 52-5, and/or a sixth (e.g., information) window 52-6. The information window 52-4 may be a dynamic information window that may dynamically display information. The information may be contextual depending on what view the user may select. The information window 52-6 may be a persistent information window, which may always be visible in the user interface 48 and may display information without change. The information may include the title, part or assembly number, document number, etc. that may uniquely identify the design(s) and/or associated assembly. Fewer or more than six display windows 52 may be utilized in accordance with the teachings disclosed herein. The viewing window 52-1 and/or preview window 52-3 may be operable to display one or more depictions of the geometry 33. The windows 52-2, 52-4 and/or 52-5 may be operable to display various information relating to the geometry 33 and/or other aspects of the design(s). **In** implementations, the window(s) 52 may be operable to display information associated with one or more attributes specified in the lightweight file 37. Attribute(s) may be associated with the geometry 33 and/or depictions (e.g., views) of the geometry 33, but some attribute(s) may be specified at a global (e.g., file) level. The attributes may be specified in a header of the file 37. The datum window 52-5 may be operable to cause the main viewing window 52-1 to display one or more datums in response to being selected by the user or otherwise activated.

The modeling environment 28 may be operable to generate one or more geometric objects 54. The modeling environment 28 may be operable to generate a tessellated model 36 that includes the geometric object(s) 54. The geometric objects 54 may establish a tessellation of geometry 33 (e.g., Figure 2). The viewing window 52-1, preview window 52-3 and/or another display window 52 may be operable to display geometry 33 established by one or more geometric objects 54 of the tessellated model 36. The geometric objects 54 may be operable to display various depictions of the tessellation of the geometry 33 in the viewing window 52-1 and/or another window 52 of the user interface 48. Each of the geometric objects 54 may be associated with one or more graphics that may depict a geometry of the design. The depictions may include two-dimensional and/or three-dimensional views of the geometry 33 and may include solids, wireframes, transparencies, etc. The modeling environment 28 may be operable to store the tessellated models 36 in one or more lightweight files 37, which may be readable by the lightweight viewer 46. In implementations, the tessellated models 36 and/or associated lightweight file(s) 37 may exclude any CAD models 32, including any CAD models 32 utilized to establish, or that may otherwise be related to, tessellated model(s) 36 of the respective geometry 33. The modeling environment 28 may be operable to store code (e.g., scripts, function calls, etc.) in the lightweight file 37 that may be operable to cause one or more functions associated with the tessellated model 36 to execute in the lightweight viewer 46, including any of the functions disclosed herein.

The geometric objects 54 may be grouped by components C of a sub-assembly and/or assembly A. In the implementation of Figure 4, the components C may include a gas turbine engine and associated components such as a gearbox and/or one or more conduits (e.g., tubes). Groups 54G of the geometric objects 54 may be associated with the geometry 33 of respective components C. The groups 54G of geometric objects 54 may be assigned to two or more responsible entities according to the ICD 43. The modeling environment 28 may be operable to embed the tessellated model 36 in the ICM 41 associated with the ICD 43.

The modeling environment 28 may be operable to generate one or more view objects 56. Each of the view objects 56 may be associated with respective depictions of the geometric object(s) 54 associated with the geometry 33. The view objects 56 may be associated with the navigation window 52-2 and/or another window 52 of the user interface 48. The navigation window 52-2 may be operable to display one or more of the view objects 56. The view objects 56 may be depicted in a list. The viewing window 52-1 may be operable to selectively display the depictions in response to user interaction or selection of the respective view objects 56.

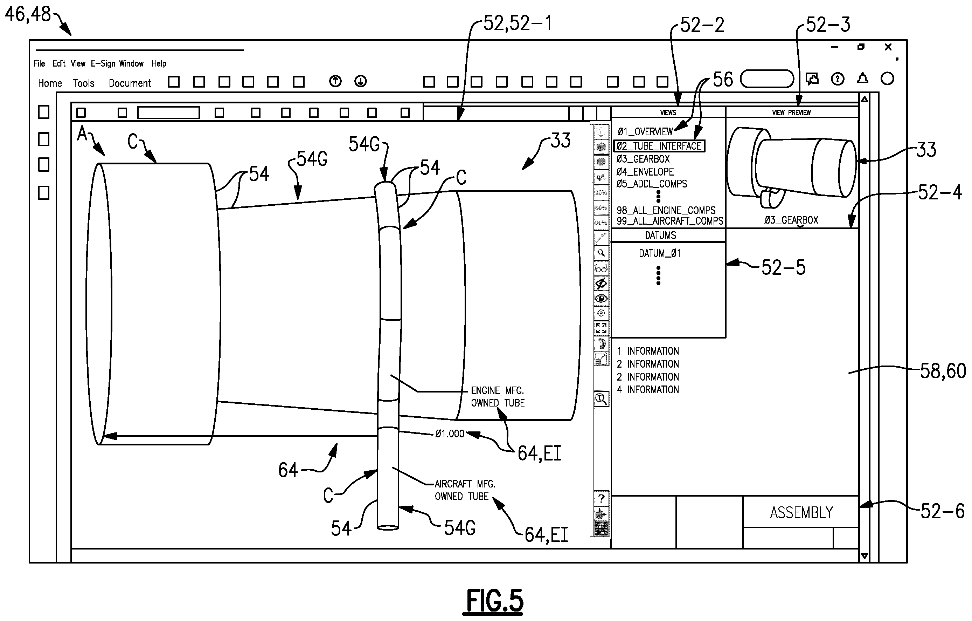

In the implementation of Figure 4, the view objects 56 may include a first view object associated with an overall representation of the geometry 33 (e.g., 01_OVERVIEW). One or more view objects 56 may be associated with another depiction of the geometry 33, such as a depiction including one or more datums or other annotations (e.g., Figures 5-9). The view objects 56 may be associated with one or more interface views (e.g., 02_TUBE_INTERFACE, 03_GEARBOX, 04_ENVELOPE, etc.). The viewing window 52-1 may be operable to display the depiction of the geometry 33 in response to selection of the respective view object 56. The preview window 52-3 may be operable to display a depiction of the geometry 33 associated with the respective view object 56 in response to user interaction. In implementations, a user may interact with the user interface 48 by positioning a cursor on or otherwise adjacent to the view object 56 to cause the preview window 52-3 to display the respective depiction (e.g., preview) of the geometry 33, which may be displayed in the viewing window 52-1 in response to selection of the view object 56 (e.g., mouse click).

The information window 52-4 may be operable to display information in the user interface 48. The information may be generic and/or may be associated with the geometry 33. The information window 52-4 may be dynamically linked to one or more of the geometric objects 54 such that selection of the geometric object 54 and/or a group 54G of the geometric objects 54 may cause information to visually update in the information window 52-4. One or more groups of geometric objects 54 may be associated with the geometry 33 of respective components C of an assembly A, including one or more gas turbine engine components and/or aircraft components.

The modeling environment 28 may be operable to generate one or more content objects 58. The tessellated model(s) 36 may include the content object(s) 58. The content object(s) 58 may be operable to establish the information window 52-4. The content object(s) 58 may be operable to selectively display information associated with the tessellated model 36 and/or respective geometry 33 in a common display region 62 and/or another portion of the user interface 48. The content object(s) 58 may be operable to establish the information window 52-4 such that the common display region 62 may be spaced apart from, but may be concurrently displayed with, the viewing window 52-1 in response to opening the tessellated model 36 in the lightweight viewer 46.

The content objects 58 may be assigned various content information, including information associated with the tessellated model 36. The content information may be assigned to content fields 59 associated with the respective content objects 58 (Figure 3). In implementations, the content fields 59 may be associated with information specified in a data structure (e.g., template) readable by the lightweight viewer 46. The lightweight file 37 may store the information in the data structure according to the **API** 50. **In** other implementations, the information may be stored directly in the respective content fields 59. The content field 59 may be a portion of the content object 58 or may be another object linked to the content object 58. Various techniques may be utilized to define the information associated with the content fields 59, including various data types or structures such as character, string, integer, boolean, array, date, time, etc. **In** implementations, the content fields 59 may contain code (e.g., script), which may be executable by the **API** 50 and/or lightweight viewer 46. The information assigned to the content objects 58 may be the same or may at least partially differ from information assigned to other content objects 58. The content objects 58 may be operable to display information assigned to the respective content fields 59 in respective portions of the information window 52-4. Each content object 58 may be operable to display the content information associated with the tessellated model 36 in the information window 52-4 in response to activation of the respective group 54G of geometric objects 54. The content object(s) 58 may be assigned content information associated with the respective groups 54G of geometric objects 54 according to the **ICD** 43. The content object(s) 58 may be operable to display, in the information window 52-4, content information assigned to the respective groups 54G of geometric objects 54 according to the ICD 43.

The content object(s) 58 may be associated with various content information. The information may include a revision history of the CAD model 32, various notes or statements associated with the CAD model 32, a bill of material (BOM) associated with component(s) represented by the geometry 33, etc. The content information may include various information relating to personnel(s) and/or organization(s) assigned to designing, reviewing, manufacturing, integrating, etc., component(s), assembly or system. The content object 58 may be operable to display a BOM and/or interface requirements information associated with the respective component(s) of the design. The information may be associated with various details of the responsible entities for the respective CAD model(s) 32 and/or associated components C of an assembly A. The content object(s) 58 may be linked to the view objects 56 such that the different portions of the content information may be selectively displayed in the information window 52-4 in response to selection of the respective view objects 56 and/or groups 54G of geometric objects 54.

The content information may be specified according to the ICD 43. The content information may include geometric requirements and/or non-geometric performance requirements which may be specified according to the ICD 43. The geometric requirements may include various dimensions, tolerances, interface standards and/or types, etc. The non-geometric performance requirements may include various parameters such as flow rate, pressure, temperature, etc. Different portions of the content information may be assigned to the groups 54G of geometric objects 54 according to the ICD 43. The content object(s) 58 may be operable to selectively display the different portions of the content information in the information window 52-4 in response to selecting or otherwise activating the respective view objects 56 and/or groups 54G of geometric objects 54.

The modeling environment 28 may be operable to generate one or more content layers 60. The layers 60 may be respective objects of the tessellated model 36. Each content object 58 may be associated with one or more of the layers 60. The content objects 58 may be assigned (e.g., occupy) the same view location in the user interface 48 but may be assigned to different layers 60 of the model 36. At least some of the layers 60 may occupy the common display region 62 of the user interface 48. The layers 60 may be dimensioned to at least partially, substantially, or completely overlap with each other in the common display region 62. The content objects 58 may be operable to selectively display content information associated with the tessellated model 36 in response to user interaction with or selection of the respective content object 58 such that the respective layer 60 may be activated, but a remainder of the layers 60 may be deactivated in the common display region 62.

The modeling environment 28 may be operable to dynamically link one or more of the content objects 58 to one or more of the view objects 56 such that contents of a list or other information assigned to the content objects 58 may update in response to user interaction with or selection of the respective view objects 56. One or more of the content objects 58 may be dynamically linked to one or more of the view objects 56 such that the content fields 59 and/or other information assigned to the respective content objects 58 may update in response to selection of the respective view object 56. The content fields 59 of the associated content object 58 may be depicted graphically as a list. **In** implementations, the list may be an interactive list. The content fields 59 associated with the respective content object 58 may be dynamically linked to one or more of the respective view objects 56. Selection of a respective view object 56 from the navigation window 52-2 may cause the interactive list to update such that content of the content fields 59 associated with the respective content object 58 may be displayed in the common display region 62 according to the selected view object 56. The content displayed in the list may include unique identifiers (e.g., part or assembly numbers, names, descriptions, etc.) assigned to the associated geometric objects 54 and related information. **In** implementations, the content object 58 may include a content field associated with each of the respective geometric objects 54. The content object 58 may be operable to selective display of content in the content fields 59 in response to selection of the respective view object 56 and/or geometric object(s) 58.

The content information displayed in the information window 52-4 may include one or more statements. The statements may be established by one or more respective content fields 59. The content objects 58 may be operable to establish a list associated with a quantity of the statements assigned to the content fields 59 of the respective content object 58. **In** the implementation of Figure 4, the content information may include interface name(s), interface nomenclature, engine manufacturing CAD configuration data and ownership, aircraft manufacturing CAD configuration data and ownership, and/or other information associated with the selected geometric object(s) 54 and/or group 54G of geometric objects 54 of the respective component(s) C.

The geometric objects 54 may include one or more visual attributes that may depict the respective geometry 33 such that the respective component(s) C may be visually distinct. Respective component(s) C of the assembly A may be visually distinct according to the respective responsible entities, which may be specified in the ICD(s) 43. Various visual attributes may be utilized. The visual attributes include a color attribute type associated with a set of colors, a contrast attribute type associated with a set of contrast levels and/or a transparency attribute type associated with a set of transparency levels.

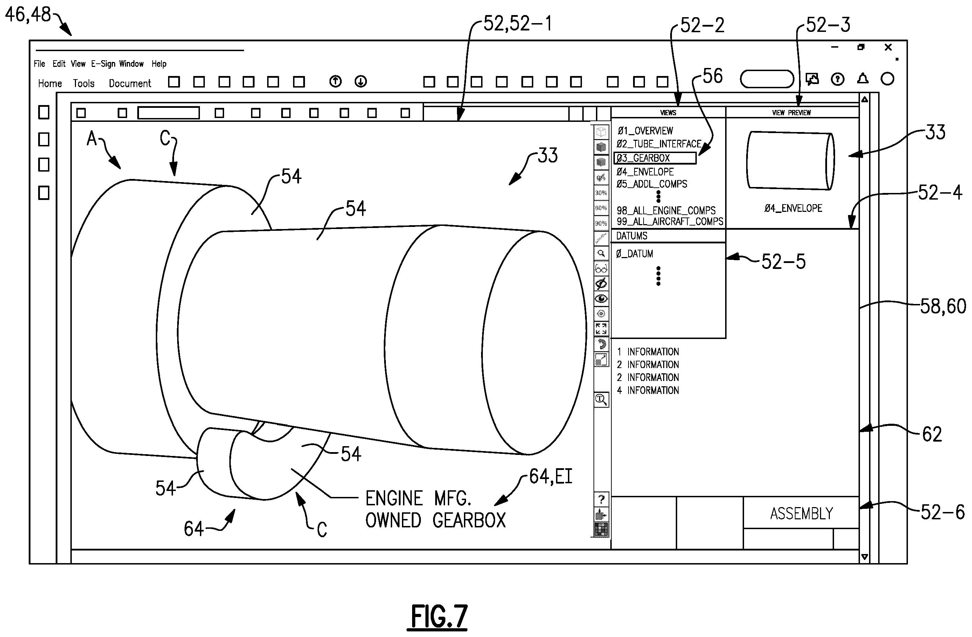

Referring to Figure 5, with continuing reference to Figures 1 and 3-4, the CAD model(s) 32 may include various annotations associated with a design. The annotations may include identifiers, datums, etc. The modeling environment 28 may be operable to establish a representation of the annotation(s) in the tessellated model 36. The modeling environment 28 may be operable to generate one or more annotation objects 64. The tessellated model 36 may include the annotation object(s) 64. The annotation objects 64 may be assigned annotation information associated with one or more respective geometric objects 54 and/or group 54G of geometric objects 54. The annotation information may include one or more annotations specified by the design and/or **ICD** 43. The annotation information may be stored in content field(s) 66 of the annotation object(s) 64 (Figure 3). The annotation information associated with the annotation objects 64 may be the same or may be different. Each of the annotation objects 64 may be operable to depict the respective annotation information associated with the tessellated model 36 as a graphical annotation in the viewing window 52-1. The graphical annotation may be depicted adjacent to the geometry 33. Each annotation object 64 may be associated with one or more view objects 56. **In** implementations, each annotation object 64 may be linked to a single view object 56 such the set of annotations may differ for the depictions of the geometry 33 (e.g., Figures 5 and 7).

The annotations and/or respective annotation information may be associated with one or more annotation types for conveying various design, manufacturing and/or integration information to the user. The annotation objects 64 may be associated with a set of annotation types. The annotation types may include an identifier annotation type, a datum annotation type, etc. The identifier annotation type may be useful for identifying other (e.g., more detailed) annotations in the display window 52. The datum annotation type may be associated with datums relating to manufacturing, assembling and/or integrating components C associated with the geometry 33.

The annotation information may be associated with one or more interfaces between adjacent components C of the assembly A according to the ICD 43 (e.g., Figure 5). The modeling environment 28 may be operable to assign the respective annotation information according to the ICD 43. The annotation information may include geometric requirements and/or non-geometric performance requirements which may be specified according to the ICD 43.

Each of the view objects 56 may be operable to establish a respective depiction of the geometry 33 in the viewing window 52-1 and/or preview window 52-3. The modeling environment 28 may be operable to link each of the annotation objects 64 to one or more of the view objects 56. The annotation objects 64 may be operable to graphically depict an annotation adjacent the depiction of the geometry 33 established by the respective view object 56.

The annotation information may include identifiers EI, which may be associated with respective responsible entities assigned to the components C of the assembly A. The annotation objects 64 may be operable to depict a relationship between the identifiers EI and the respective groups 54G of geometric objects 54. In the implementation of Figure 5, the identifiers EI may be associated with an engine manufacturer and an aircraft manufacturer.

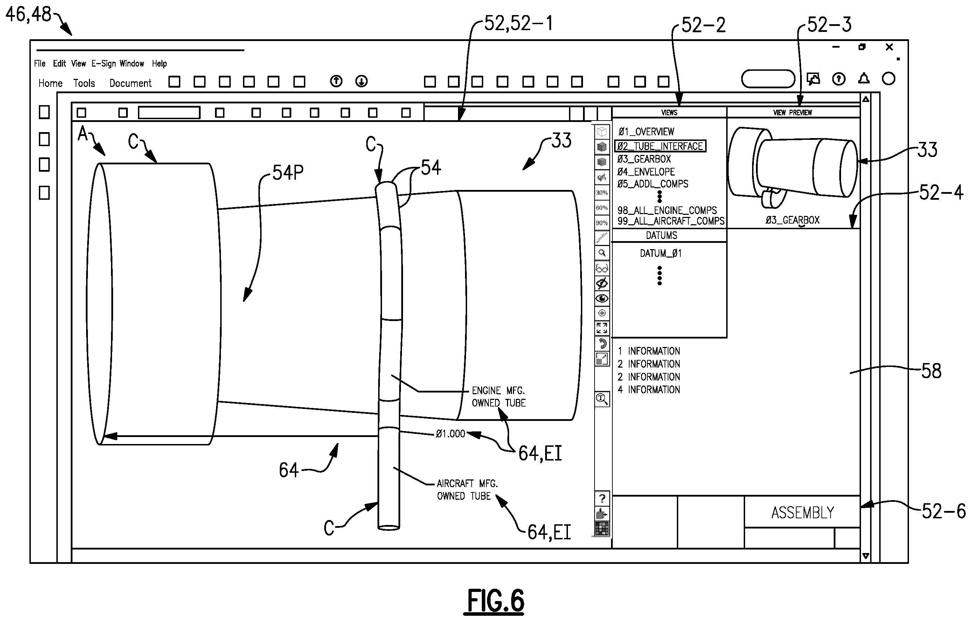

Referring to Figure 6, with continuing reference to Figures 1 and 3-5, the geometric objects 54 may include one or more datums 54D. The tessellated model 36 may incorporate various datums, including one or more points, lines, etc. In the implementation of Figure 6, the datum 54D may be a line associated with an axis of the assembly A and/or component C, such as an engine longitudinal axis. The datum 54D may be visible in the viewing window 52-1 in response to selecting a transparent view of one or more other geometric objects 54. In implementations, the datum 54D may be listed in and/or selected from the datum window 52-5.

Referring to Figure 7, with continuing reference to Figures 1 and 3-5, one or more of the view objects 56 may be associated with a depiction of the geometry 33 and annotation objects 64 limited to a single responsible entity and/or associated component C (e.g., Engine Mfg. Owned Gearbox). Other view objects 56 may be limited to the respective component(s) C, including one or more dimensions and/or tolerances. Limiting the annotations to the responsible entity and/or component(s) C may declutter the viewing window 52-1 and/or protect other non-essential information.

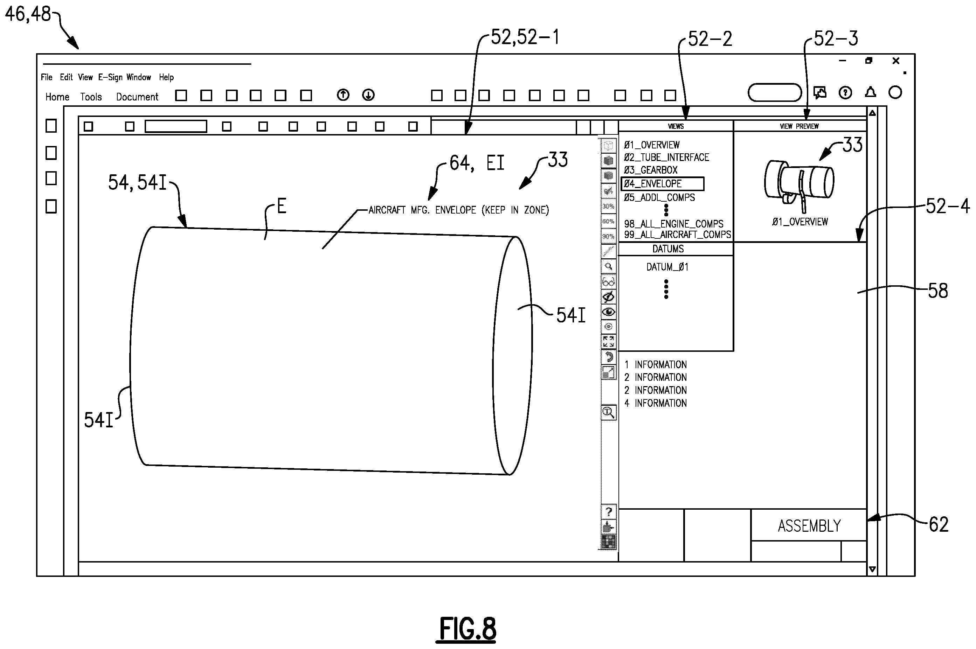

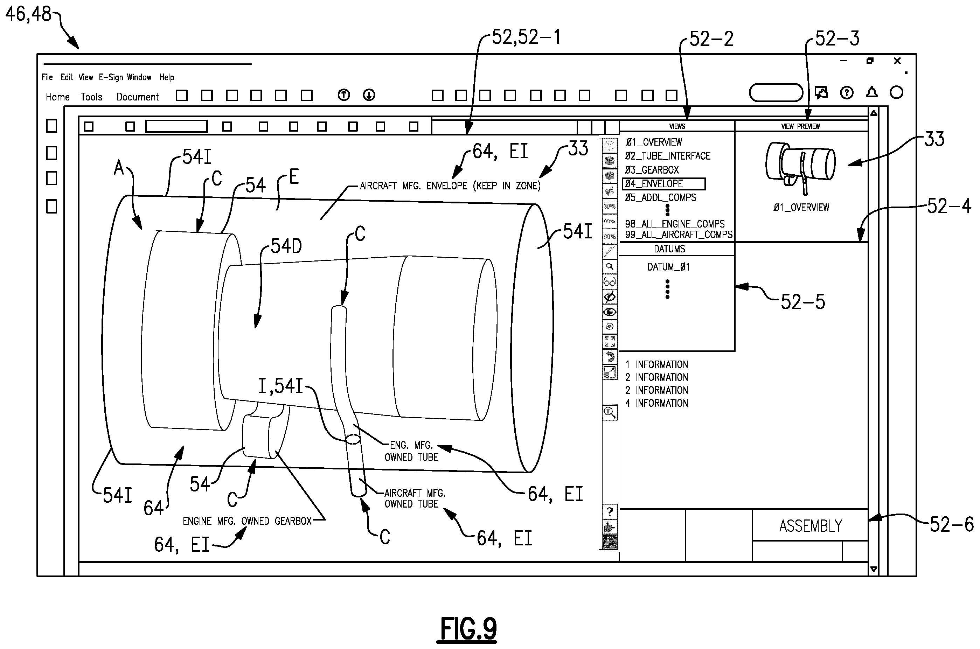

Referring to Figures 8-9, with continuing reference to Figures 1 and 3-7, the geometric objects 54 may include one or more interface objects 54I. The interface object 54I may be associated with an interface I between two or more adjacent geometric objects 54, which may be representative of adjacent components C of the assembly A (e.g., Figure 9). Groups 54G of the geometric objects 54 may be representative of two or more interfacing components C. The modeling environment 28 may be operable to determine an interface I between adjacent components C of the same assembly A and/or other component(s) outside of the assembly A according to the ICD 43. The modeling environment 28 may be operable to generate the interface object(s) 54I to depict the respective interface(s) I. The interface objects 54I may be established according to the CAD model 32 and/or ICD 43. The modeling environment 28 may be operable to assign the annotation information associated with the interface(s) and/or interface object(s) 54I to one or more of the respective annotation objects 64. The geometric objects 54 may include a (e.g., first) group of interface objects 54I associated with an envelope E representative of a boundary constraining the assembly A. The boundary may be associated with a "keep in zone" useful in limiting one or more dimensions of the components C of the assembly A. The envelope E may not be representative of a physical component C of the assembly A, but the envelope E may be associated with geometry in the CAD model 32 and/or ICM 41. In the implementation of Figure 9, the geometric objects 54 associated with the component(s) C of the assembly A may be depicted in the viewing window 52-1 in response to selecting a transparent view of the interface objects 54I associated with the envelope E.

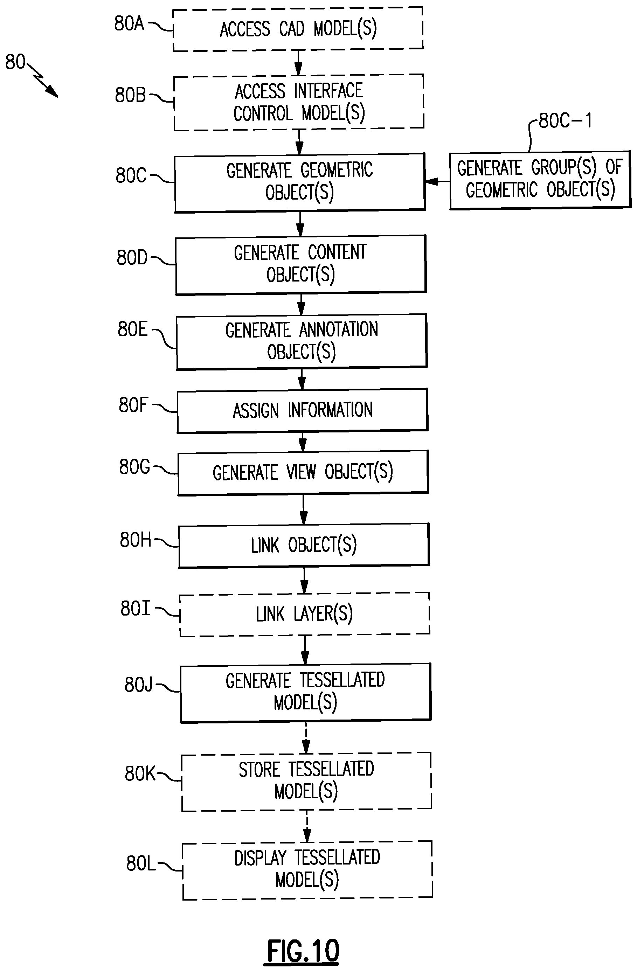

Figure 10 discloses a method of establishing and/or interacting with a tessellated model in a flow chart 80 according to an implementation. The method 80 may be utilized to generate one or more tessellated models associated with design geometry. The geometry may be defined in one or more associated CAD models. The tessellated models may exclude any CAD models associated with the geometry. Fewer or additional steps than are recited below could be performed within the scope of this disclosure, and the recited order of steps is not intended to limit this disclosure. The modeling environment 28 may be programmed with logic for performing method 80. Reference is made to the system 20.

Referring to Figure 1, with continuing reference to Figure 10, one or more CAD models 32 may be accessed at block 80A. The CAD model(s) 32 may be associated with respective geometry 33. A CAD system 30 may be utilized to define the geometry 33 in the CAD model(s) 32. The CAD models 32 may be associated with respective components of an assembly and/or sub-assembly, such as the assembly A of Figure 4.

At block 80B, one or more ICMs 41 may be accessed. The ICM 41 may be associated with one or more ICDs 43.

Referring to Figures 2-4, with continuing reference to Figure 1, one or more geometric objects 54 may be generated at block 80C. The geometric objects 54 may establish a tessellation of the geometry 33 (e.g., Figure 2), which may be stored in a tessellated model 36. The geometric objects 54 may be operable to display the tessellation of geometry 33 in the viewing window 52-1 and/or another display window 52 of the user interface 48.

Block 80C may include generating one or more groups 54G of geometric objects 54. The groups 54G of geometric objects 54 may establish a tessellation of geometry 33 stored in the respective CAD model(s) 32. The geometric objects 54 may be grouped such that activation (or deactivation) of one of the geometric objects 54 may cause activation (or deactivation) of the remaining geometric objects 54 of the group 54G. The groups 54G may be associated with respective components C of an assembly A (e.g., Figure 4). The groups 54G of geometric objects 54 may be associated with respective components C of the assembly A assigned to different responsible entities according to the respective ICD 43.

Referring to Figures 3 and 5, with continuing reference to Figures 1 and 4, method 80 may include generating one or more information objects. The information objects may include one or more content objects 58 and/or annotation objects 64. One or more content objects 58 may be generated at block 80D. The content objects 58 may be operable to establish the information window 52-4 of the user interface 48. Block 80D may include associating the content objects 58 with respective layers 60 that may occupy the common display region 62 of the user interface 48. The content objects 58 may be operable to establish the information window 52-4 such that the common display region 62 may be spaced apart from, but may be concurrently displayed with, the viewing window 52-1 in the user interface 48. At block 80E, one or more annotation objects 64 may be generated.

At block 80F, information associated with the geometry 33 and/or other information may be assigned to the content object(s) 58 and/or annotation object(s) 64. In implementations, the information may be stored in one or more content fields 59, 66. Generating the annotation objects 64 may include assigning information associated with annotations of the geometric objects 54 to the respective content fields 66. In implementations, block 80F may include assigning information associated with the geometric objects 54 to the associated information objects, including the content object(s) 58 and/or the annotation object(s) 64, according to the ICD 43. The information objects may be operable to depict the respective annotation information in the user interface 48 in response to activation of the respective groups 54G of geometric objects 54. The information objects may include one or more annotation objects 64 and/or one or more content objects 58. The annotation object(s) 64 may be operable to depict the assigned annotation information as graphical annotations in the viewing window 52-1. The content object(s) 58 may be operable to display different portions of the assigned content information in the information window 52-4 of the user interface 48 in response to selecting or otherwise activating the respective group 54G of geometric objects 54.

The information may be displayed utilizing any techniques disclosed herein. The content objects 58 may be operable to selectively display the respective content information in the common display region 62 of the user interface 48. Each of the annotation objects 64 may be operable to depict the respective annotation information as a graphical annotation in the viewing window 52-1. The graphical annotation may include any of the annotations disclosed herein, such as identifiers, datums (e.g., dimensions, tolerances, etc.), and other information that may be associated with the geometric objects 54 and/or geometry 33 of the design and/or associated components C of the assembly A. Assigning the annotation information may include assigning the content field 66 of each of the annotation objects 64 to at least one or more of the annotation types. The assigned annotation type may be specified in a separate content field 66 of the annotation object 64. The annotation types may include any of the annotation types disclosed herein.

At block 80G, one or more view objects 56 may be generated. The view objects 56 may be associated with respective depictions of the geometry 33.

At block 80H, one or more of the objects may be linked to other object(s) of the tessellated model 36, including any of the objects disclosed herein. The objects may include the geometric objects 54, view objects 56, content objects 58 and/or annotation objects 64. Different portions of the content information and/or annotation information may be assigned to the groups 54G of geometric objects 54 according to the ICD 43. Different content objects 58 may be linked to the respective groups 54G of geometric objects 54 such that content associated with respective components C of the assembly A may be selectively displayed in the information window 52-4.

In other implementations, linking the objects at block 80H may include dynamically linking one or more of the content objects 58 to one or more of the view objects 56 such that the information assigned to the respective content object 58 may update in response to user action with the respective view object 56. In implementations, the content objects 58 may be operable to display a list and/or table of the information which may be dynamically updated in response to selection of the view object 56.

At block 80I, one or more of the objects may be linked to one or more respective layers 60. Different content objects 58 may be linked to the respective layers 60. The layer 60 of the respective content object(s) 58 may be selectively activated and the remainder of the layers 60 associated with the information window 52-4 and/or another portion of the user interface 48 may be selective deactivated in response to user interaction with or selection of the respective view objects 56, geometric objects 54 and/or groups 54G of geometric objects 54.

At block 80J, one or more tessellated models 36 may be generated. The tessellated models 36 may be generated utilizing any of the techniques disclosed herein. The tessellated model 36 may include any of the objects and features disclosed herein, such as the geometric objects 54, content objects 58 and/or annotation objects 64. In implementations, the tessellated model 36 may include the geometric objects 54 and the associated information objects, including the content object(s) 58 and/or annotation object(s) 64.

At block 80K, the tessellated model(s) 36 may be stored in one or more lightweight files 37. The files 37 may exclude the CAD model(s) 32 associated with the respective geometry 33. Block 80K may include associating the tessellated model 36 with the interface control model 41 of the respective ICD 43. Block 80K may include embedding the tessellated model 36 in the ICM 41, which may facilitate integration activities by accessing the tessellated model 36 and/or associated file 37 from the ICM 41.

At block 80L, the tessellated model(s) 36 may be displayed in a lightweight viewer 46. Block 80L may include establishing the user interface 48 in the display according to the objects of the tessellated model 36. The tessellated model 36 may cause the lightweight viewer 46 to execute code including one or more scripts, which may be specified in the content fields 59 of the content objects 58 and/or content fields 66 of the annotation objects 64, or may otherwise be embedded in the tessellated model 36. Block 80L may include displaying one or more depictions of the geometry 33 in the display window(s) 52.

The systems and methods disclosed herein may be utilized to generate tessellated models associated with geometry of one or more components, assemblies and/or systems. The tessellated models may be stored in relatively compact files, which may be readable by a lightweight viewer provided to users who may not have access to a CAD system. The users may include different responsible entities assigned to various components of an assembly. The tessellated models may include one or more objects that may depict geometry and/or information associated with interfaces between the components, which may facilitate integration. Data related to aircraft integration including the visualization of the geometry, tolerancing information, hardware ownership, etc. may be conveyed by the tessellated model. The tessellated model may be accessible and viewed by various interfacing entities (e.g., integrators), which may save time that may otherwise be required to load the CAD geometry in a computationally intensive CAD system. The disclosed techniques may increase fidelity and collaboration in that the integrators may simultaneously view the interface definition as well as the 3D physical definition of an interface.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein; however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A user interface (48) for a lightweight viewer (46) comprising:
a viewing window (52-1) operable to display geometry (33) established by geometric objects (54) of a tessellated model (36), groups (54G) of the geometric objects (54) associated with the geometry (33) of respective components (C) of an assembly (A), and annotation objects (64) of the tessellated model (36) operable to depict annotation information associated with the tessellated model (36) as graphical annotations in the viewing window (52-1);
wherein the groups (54G) of the geometric objects (54) are assigned to two or more responsible entities according to an interface requirements definition (43), and the annotation information is associated with one or more interfaces between adjacent components of the assembly according to the interface requirements definition (43).

2. The user interface as recited in claim 1, further comprising:
an information window established by a content object of the tessellated model, the content object operable to display content information associated with the tessellated model in the information window in response to activation of the respective group of geometric objects; and
the content information is specified according to the interface requirements definition.

3. The user interface as recited in claim 2, wherein the annotation information and/or the content information includes non-geometric performance requirements specified according to the interface requirements definition; and/or
wherein:
different portions of the content information are assigned to the groups of geometric objects according to the interface requirements definition; and
the content object is operable to selectively display the different portions of the content information in response to selection of the respective groups of geometric objects.

4. The user interface as recited in claim 2 or 3, further comprising:
a navigation window operable to display view objects associated with respective depictions of the geometric objects;
wherein the viewing window is operable to selectively display the depictions in response to selection of the respective view objects; and
the content object is linked to the view objects such that the different portions of the content information are selectively displayed in the information window in response to selection of the respective view object.

5. The user interface as recited in any preceding claim, wherein the groups of geometric objects include a first group of geometric objects associated with an envelope representative of a boundary constraining the assembly.

6. The user interface as recited in any preceding claim, wherein:
the geometric objects include one or more visual attributes that depict the respective geometry such that the respective components are visually distinct according to the respective responsible entities; and, optionally,
wherein the visual attributes include a color attribute type associated with a set of colors, a contrast attribute type associated with a set of contrast levels and/or a transparency attribute type associated with a set of transparency levels.

7. The user interface as recited in any preceding claim, wherein the annotation information includes identifiers associated with the respective responsible entities, and the annotation objects are operable to depict a relationship between the identifiers and the respective groups of geometric objects; and/or
wherein the tessellated model excludes any CAD model associated with the geometry.

8. A system (20) for generating a tessellated model (36) comprising:
processing circuitry (22) including one or more processors operably coupled to memory;
wherein the processing circuitry is operable to execute a modeling environment (28), and the modeling environment is operable to:
access a computer-aided design model associated with geometry of components that establish an assembly, the components associated with different responsible entities according to an interface requirements definition;
generate geometric objects that establish a tessellation of the geometry, the geometric objects grouped by component;
generate annotation objects associated with the respective geometric objects and assigned annotation information according to the interface requirements definition;
generate a content object assigned content information associated with the respective groups of geometric objects according to the interface requirements definition;
generate a tessellated model including the geometric objects, the annotation objects and the content object;
wherein the geometric objects are operable to display the tessellation of the geometry in a viewing window of a user interface;
wherein the annotation objects are operable to depict the respective annotation information as graphical annotations in the viewing window; and
wherein the content object is operable to display, in an information window, content information assigned to the respective groups of geometric objects according to the interface requirements definition.

9. The system as recited in claim 8, wherein the geometric objects include an interface object, and the modeling environment is operable to:
determine an interface between adjacent components of the assembly according to the interface requirements definition;
generate the interface object to depict the interface; and
assign the annotation information associated with the interface to one or more of the annotation objects.

10. The system as recited in claim 8 or 9, wherein the annotation information and/or the content information includes non-geometric performance requirements specified according to the interface requirements definition.

11. The system as recited in any of claims 8 to 10, wherein the modeling environment is operable to:
generate a navigation window operable to display view objects associated with respective depictions of the geometric objects;
wherein the viewing window is operable to selectively display the depictions in response to selection of the respective view objects; and, optionally,
wherein:
different portions of the content information are selectively displayed in the information window in response to selection of the respective view object.

12. The system as recited in any of claims 8 to **11,** wherein the modeling environment is operable to embed the tessellated model in an interface control model associated with the interface requirements definition; and/or
wherein the modeling environment is operable to store the tessellated model in a file readable by a lightweight viewer, the file excluding the CAD model.

13. A method (80) of establishing a tessellated model (36) comprising:
generating (80C) groups of geometric objects that establish a tessellation of geometry stored in a computer-aided design model, the groups of geometric objects associated with respective components of an assembly assigned to different responsible entities according to an interface requirements definition, wherein the geometric objects are operable to display the tessellation of the geometry in a viewing window of a user interface;
generating (80D) information objects;
assigning (80F) information associated with the geometric objects to the information objects according to the interface requirements definition, wherein the information objects are operable to depict the respective information in the user interface in response to activation of the respective groups of geometric objects; and
generating (80J) a tessellated model including the geometric objects and the information objects.

14. The method as recited in claim 13, wherein the information objects include one or more annotation objects and a content object, the annotation objects are operable to depict the assigned information as graphical annotations in the viewing window, and the content object is operable to display different portions of the assigned information in an information window of the user interface in response to selection of the respective group of geometric objects.

15. The method as recited in claim 13 or 14, further comprising:
storing the tessellated model in a file that excludes the CAD model; and
displaying the tessellated model in a lightweight viewer.
